(19) Europäisches Patentamt
European Patent Office
Office européen des brevets

(11) **EP 4 645 513 A1**

(12) **EUROPEAN PATENT APPLICATION**
published in accordance with Art. 153(4) EPC

(43) Date of publication:
**05.11.2025 Bulletin 2025/45**

(21) Application number: **23911999.3**

(22) Date of filing: **22.12.2023**

(51) International Patent Classification (IPC):
*H01M 10/0587* (2010.01)     *H01M 4/66* (2006.01)

(52) Cooperative Patent Classification (CPC):
**H01M 4/66; H01M 10/0587;** Y02E 60/10;
Y02P 70/50

(86) International application number:
**PCT/JP2023/046244**

(87) International publication number:
**WO 2024/143219 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022210772**

(71) Applicant: **Panasonic Intellectual Property
Management Co., Ltd.
Kadoma-shi, Osaka 571-0057 (JP)**

(72) Inventor: **UCHIYAMA Yohei
Kadoma-shi, Osaka 571-0057 (JP)**

(74) Representative: **Novagraaf International SA
Chemin de l'Echo 3
1213 Onex, Geneva (CH)**

(54) **LITHIUM SECONDARY BATTERY**

(57)     A lithium secondary battery includes: a wound electrode group having a positive electrode, a negative electrode, and a separator disposed between the positive electrode and the negative electrode; a core member disposed in a hollow of the electrode group; and a nonaqueous electrolyte having lithium ion conductivity. At the negative electrode, lithium metal deposits during charging, and the lithium metal dissolves during discharging. The core member has a hollow tubular shape, and has a slit extending in an axial direction, with both end portions in a circumferential direction that regulate the slit being misaligned without abutting each other.

*FIG. 1A*

EP 4 645 513 A1

# FIG. 1B

**Description**

[Technical Field]

The present disclosure relates to a lithium secondary battery.

[Background Art]

Lithium secondary batteries (lithium-metal secondary batteries) are promising as high-capacity nonaqueous electrolyte secondary batteries superior to lithium-ion batteries. In a lithium secondary battery, lithium metal deposits on the negative electrode during charging, and during discharging, the lithium metal dissolves, to be released as lithium ions into the nonaqueous electrolyte. A lithium secondary battery includes a wound electrode group formed by spirally winding a positive electrode and a negative electrode, with a separator interposed therebetween. The wound electrode group has a hollow.

In a lithium secondary battery, lithium metal deposits on the negative electrode during charging, and the lithium metal dissolves during discharging. The volume change of the negative electrode therefore is great. Consequently, the electrodes (esp., the negative electrode) tend to deform near the hollow of the electrode group during charging and discharging, and the buckling etc. of the electrodes tends to occur. One possible solution to this is to place a core member in the hollow of the wound electrode group.

Patent Literature 1 proposes a cylindrical lithium-ion battery in which a positive electrode plate and a negative electrode plate are wound, with a separator interposed therebetween, around an axial core, into a wound group, and the wound group is housed in a cylindrical battery container. The wound group includes two pairs of separators, each pair consisting of two separators and disposed between the positive electrode plate and the negative electrode plate. The end portions of the separators of each pair are integrated by welding, and the integrated end portions are joined on the axial core at positions different from each other.

[Citation List]

[Patent Literature]

Patent Literature 1: Japanese Laid-Open Patent Publication No. 2001-229970

[Summary of Invention]

[Technical Problem]

In a lithium secondary battery, when a core member is disposed in the hollow of the electrode group, the surface pressure of the whole electrode group increases significantly during charging and discharging, which may damage the electrode group and result in deterioration in battery performance.

[Solution to Problem]

One aspect of the present disclosure relates to a lithium secondary battery, including: a wound electrode group having a positive electrode, a negative electrode, and a separator disposed between the positive electrode and the negative electrode; a core member disposed in a hollow of the electrode group; and a nonaqueous electrolyte having lithium ion conductivity, wherein at the negative electrode, lithium metal deposits during charging, and the lithium metal dissolves during discharging, and the core member has a hollow tubular shape, and has a slit extending in an axial direction, with both end portions in a circumferential direction that regulate the slit being misaligned without abutting each other.

[Advantageous Effects of Invention]

According to the present disclosure, it is possible to suppress the deterioration in performance of the lithium secondary battery.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

[FIGS. 1A and 1B] Diagrams schematically showing a cross section perpendicular to the axial direction of an example of a core member disposed in the hollow of an electrode group of a lithium secondary battery, in which FIG. 1A shows the core member in the lithium secondary battery during discharging in the initial stage, and FIG. 1B shows the core member in the lithium secondary battery during discharging after charge-discharge cycles.

[FIGS. 2A and 2B] Diagrams schematically showing a cross section perpendicular to the axial direction of another example of a core member disposed in the hollow of an electrode group of a lithium secondary battery, in which FIG. 2A shows the core member in the lithium secondary battery during discharging in the initial stage, and FIG. 2B shows the core member in the lithium secondary battery during discharging after charge-discharge cycles.

[FIGS. 3A and 3B] Diagrams schematically showing a cross section perpendicular to the axial direction of another example of a core member disposed in the hollow of an electrode group of a lithium secondary battery, in which FIG. 3A shows the core member in the lithium secondary battery during discharging in the initial stage, and FIG. 3B shows the core member in the lithium secondary battery during discharging after charge-discharge cycles.

[FIG. 4] A diagram showing a line segment L1 used to calculate the area of a region surrounded by the contour of a cross section of a core member, when both end portions of the core member face each other with a space therebetween in the radial direction.

[FIG. 5] A diagram showing a line segment L2 used to calculate the area of a region surrounded by the contour of a cross section of a core member, when both end portions of the core member are spaced apart from each other in the circumferential direction.

[FIG. 6] A diagram schematically showing a cross section perpendicular to the axial direction of a core member disposed in the hollow of an electrode group of the conventional lithium secondary battery during discharging in the initial stage.

[FIG. 7] A schematic longitudinal sectional view of a lithium secondary battery according to one embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

The lithium secondary battery according to the present disclosure is sometimes referred to as a lithium metal secondary battery. At the negative electrode of this type of battery, lithium metal deposits during charging, and the lithium metal dissolves during discharging. Specifically, the negative electrode has at least a negative electrode support, and lithium metal deposits on the negative electrode support.

The lithium secondary battery according to an embodiment of the present disclosure includes a wound electrode group including a positive electrode, a negative electrode, and a separator disposed between the positive electrode and the negative electrode, and a core member disposed in a hollow of the electrode group, and a nonaqueous electrolyte having lithium ion conductivity.

The wound electrode group has a columnar shape with a hollow, and is formed by winding a positive electrode and a negative electrode with a separator interposed therebetween. The core member has a hollow tubular shape.

In the present specification, a "cross section of the electrode group" refers to a cross section perpendicular to the winding axis of the electrode group. Also, a "cross section of the core member" refers to a cross section perpendicular to the axis of the core member, and when the core member is inserted in the hollow of the electrode group, refers to a cross section perpendicular to the winding axis of the electrode group.

The core member disposed in the hollow of the electrode group pushes the electrode group from the inner circumferential side, which stabilizes the shape of the electrode group, suppresses the deformation of the electrodes (esp., the negative electrode) in the vicinity of the hollow of the electrode group during charging and discharging, and suppresses the buckling of the electrodes, the rupture of the electrodes, and the like, that occur associated with the deformation of the electrodes. The decrease in surface pressure of the electrode group (esp., on the inner circumferential side) due to the deformation of the electrodes in the vicinity of the hollow of the electrode group is suppressed, and the formation and growth of dendrites of lithium metal on the negative electrode is suppressed.

Note that the surface pressure of the electrode group herein refers to a pressure applied in the radial direction of the electrode group, due to the pushing of the core member against the inner circumferential surface of the electrode group. The outer circumferential surface of the electrode group is usually pushed by a battery can housing the electrode group and the like.

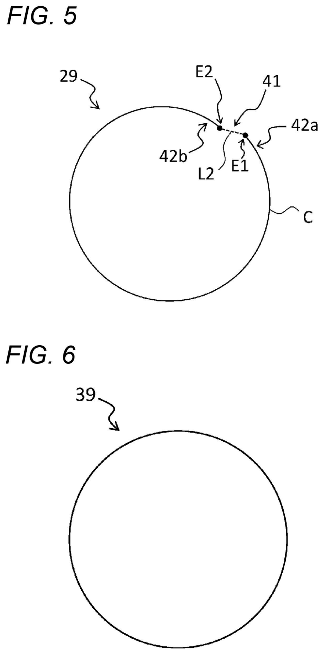

Conventionally, when a core member (e.g., core member 39 in FIG. 6) is disposed in the hollow of the electrode group, the surface pressure of the electrode group increases significantly during charging and discharging (esp., during charging when the negative electrode expands), and the electrode group may be damaged. For example, the negative electrode may rupture. By placing the core member, the formation and growth of dendrites is suppressed to some extent, but on the other hand, the separator is strongly pressed by the negative electrode, and the dendrites may pierce through the separator.

In this regard, the core member of the lithium secondary battery according to the present disclosure has a hollow tubular shape, and has a slit extending in the axial direction, with both end portions in the circumferential direction that regulate the slit being misaligned without abutting each other. Since both end portions in the circumferential direction that regulate the slit are misaligned without abutting each other, in the event when the surface pressure of the electrode group increases, the both end portions are displaced in the circumferential direction, so that the core member can shrink in the radial direction. By the shrinking of the core member in the radial direction, the increase in the surface pressure of the electrode group can be suppressed, and the damage to the electrode group and the deterioration of the battery performance (e.g., cycle characteristics) associated therewith can be suppressed.

The outer shape of the electrode group is, for example, cylindrical, and the outer shape of a cross section of the electrode group may be, for example, circular or elliptical. The shape of the core member may be selected according to the shape of the electrode group (hollow). When the outer shape of a cross section of the electrode group is circular, the outer shape of a cross section of the core member to be inserted in the hollow of the electrode group is circular. When the outer shape of a cross section of the electrode group is elliptical, the outer shape of a cross section of the core member to be inserted in the hollow of the electrode group is elliptical.

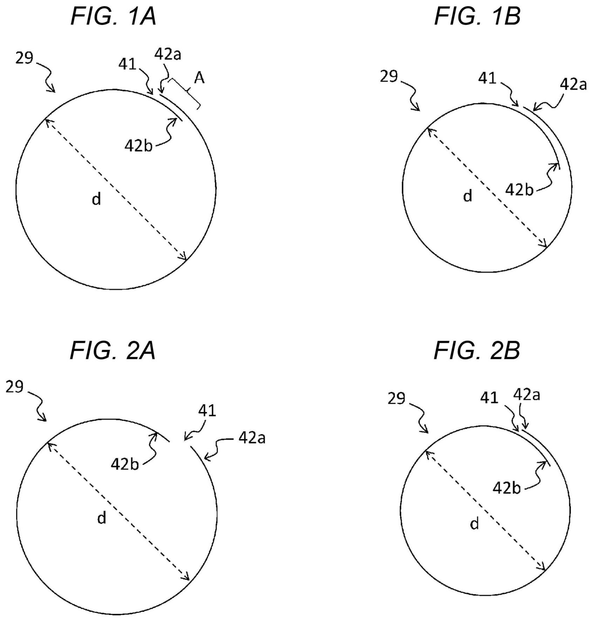

Here, FIGS. 1A to 3B schematically illustrate cross sections of examples of the core member disposed in the hollow of the electrode group of the lithium secondary battery. In FIGS. 1A to 3B, only the core member is shown, and constituent members (electrode group, etc.) other than the core member are not shown. The core member, although having a certain thickness in the radial direction, is shown linearly for the sake of convenience. FIGS. 1A, 2A and 3A illustrate the core member of the lithium secondary battery during discharging in the initial stage, and FIGS. 1B, 2B and 3B illustrate the core member of the lithium secondary battery during discharging after charge-discharge cycles.

During discharging refers to when the depth of discharge (DOD) is 90% or more. The depth of discharge (DOD) being 90% or more refers to a state in which the quantity of electricity corresponding to 90% or more of the rated capacity of the battery has been discharged. The battery in the initial stage includes a battery before the first charging, a battery immediately after purchase, and a battery subjected to charging and discharging once to several times after purchase.

The symbol d in each drawing indicates the maximum outer diameter of the core member. In each drawing, the shape and feature of each component do not necessarily reflect the actual dimensions, and are not necessarily drawn at the same scale. The same components are denoted by the same reference numerals throughout the drawings.

A core member 29 having a hollow tubular shape in FIGS. 1A and 2A has a circular cross-sectional outer shape and is disposed in the hollow of an electrode group (not shown) whose cross-sectional outer shape is also circular. The maximum outer diameter d of the core member 29 in FIGS. 1A and 2A is the diameter of a circle which is the cross-sectional outer shape of the core member.

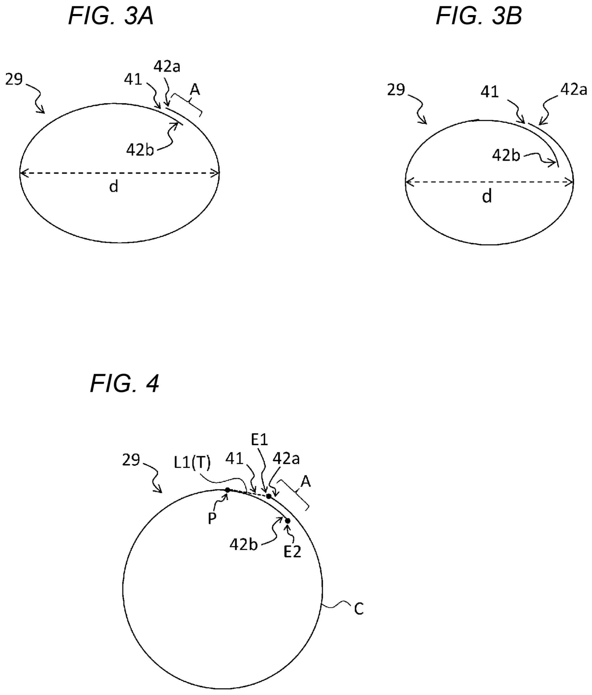

The core member 29 having a hollow tubular shape in FIG. 3A has an elliptical circular cross-sectional outer shape and is disposed in the hollow of an electrode group (not shown) whose cross-sectional outer shape is also elliptical. The maximum outer diameter d of the core member 29 in FIG. 3A is the longest diameter of an ellipse which is the cross-sectional outer shape of the core member.

The core members 29 in FIGS. 1A, 2A and 3A each have a slit 41 extending in the axial direction, and both end portions 42a and 42b in the circumferential direction that regulate the slit 41 are misaligned without abutting each other.

In FIGS. 1A and 3A, the core member 29 has, in the radial direction, a region A where the both end portions 42a and 42b face each other. In FIGS. 1A and 3A, the both end portions 42a and 42b facing each other are spaced apart from each other in the radial direction, but may be in contact with each other to the extent that they can be displaced in the circumferential direction during charging and discharging. In FIG. 2A, the both end portions 42a and 42b are spaced apart from each other in the circumferential direction of the core member 29.

When the surface pressure of the electrode group increases after charge-discharge cycles, the core member 29 is strongly pushed from its outer circumferential side by the electrode group, and at least one of the both end portions 42a and 42b is displaced in the circumferential direction, and the core member 29 shrinks in the radial direction as shown in FIGS. 1B, 2B and 3B (the maximum outer diameter d becomes smaller). During shrinking of the core members in FIGS. 1B, 2B and 3B, the both end portions 42a and 42b facing each other may be in contact with each other.

The shrinkage percentage of the core member after the charge-discharge cycles is preferably 2% or more and 80% or less, more preferably 2% or more and 70% or less, and even more preferably 7% or more and 60% or less. When the shrinkage percentage is 2% or more (or 5% or more), the increase of the surface pressure of the electrode group is easily suppressed. When the shrinkage percentage is 80% or less, the deformation of the electrodes in the vicinity of the hollow of the electrode group during charging and discharging is easily suppressed, and the surface pressure of the electrode group is likely to be maintained stably. The smaller the shrinkage percentage is (e.g., when the shrinkage percentage is 70% or less), the smaller the curvature of the cross section of the core member during shrinking is, and the less likely the end portions that regulate the slit are to pierce through the separator in the vicinity of the end portions.

The shrinkage percentage of the core member is determined as follows.

An X-ray CT image of a cross section of the battery (a cross section perpendicular to the winding axis of the electrode group) in a discharged state in the initial stage is obtained. An area S1 of the region surrounded by the contour of the outer shape of a cross section of the core member in the image is calculated.

A lithium secondary battery is subjected to charge-discharge cycles in a 20 °C environment, to obtain a battery in a discharged state at the 50th cycle. At this time, charging is performed until the state of charge (SOC) reaches 90% or more, and discharging is performed until the DOD reaches 90% or more. The SOC being 90% or more refers to a state in which 90% or more of the rated capacity of the battery has been charged.

Thereafter, an X-ray CT image of the battery is obtained in the same manner as above, and an area S2 of the region surrounded by the contour of the outer shape of a cross section of the core member in the image is calculated.

Using the S1 and the S2 obtained above, the shrinkage percentage (%) of the core member is calculated from the following formula.

$$\text{Shrinkage percentage of core member} = \{(S1 - S2) / S1\} \times 100$$

In the case of the core member as illustrated in FIG. 4, the area of the region surrounded by the contour of the outer shape of a cross section of the core member is calculated as follows.

In FIG. 4, the both end portions 42a and 42b of the core member 29 face each other with a space therebetween in the radial direction. In this case, first, a tangent line T is drawn that passes through a tip end E 1 of the end portion 42a on the outer side and is tangent to a contour (arc) C of the outer shape of a cross section of the core member 29. At this time, the point of contact between the contour C and the tangent line T is denoted as P. The area of the region surrounded by a line segment L1 from the tip end E1, which is a part of the tangent line T, to the point of contact P, and the contour C connecting both ends of the line segment L1 (excluding a portion of the core member 29 from a tip end E2 of the end portion 42b on the inner side to the point of contact P) is calculated as an area of the region surrounded by the contour of the outer shape of the core member.

In the case of the core member as illustrated in FIG. 5, the area of the region surrounded by the contour of the outer shape of a cross section of the core member is calculated as follows.

In FIG. 5, the both end portions 42a and 42b of the core member 29 are spaced apart from each other in the circumferential direction. In this case, a line segment L2 is drawn that connects the tip end E1 of the end portion 42a and the tip end E2 of the end portion 42b at the shortest distance, and the area of the region surrounded by the line segment L2 and the contour (arc) C of the outer shape of a cross section of the core member 29 is calculated as an area of the region surrounded by the contour of the outer shape of the core member.

The thickness in the radial direction of the core member is preferably 0.005 mm or more and 0.4 mm or less (or 0.3 mm or less), and more preferably 0.01 mm or more (or 0.05 mm or more) and 0.2 mm or less. The thickness in the radial direction of the core member means the thickness in the radial direction in a cross section of the core member. When the thickness of the core member is 0.005 mm or more, the strength of the core member is likely to be ensured, and the electrode group is more stably pushed appropriately by the core member from the inner circumferential side during charging and discharging. When the thickness of the core member is 0.4 mm or less, the core member can easily shrink appropriately during charging and discharging, and the increase of the surface pressure of the electrode group is likely to be suppressed.

From the viewpoint of suppressing the rupture of the electrodes during charging and discharging and improving the energy density, the maximum outer diameter of the core member during discharging in the initial stage may be 1.5 mm or more and 7 mm or less, and is preferably 1.5 mm or more and 6 mm or less (or 4 mm or less). When the outer shape of a cross section of the core member is circular, the maximum outer diameter of the core member is the diameter of the circle of the outer shape. When the outer shape of a cross section of the core member is elliptical, the maximum outer diameter of the core member is the longest diameter of the ellipse of the outer shape.

The outer diameter of the core member may be set such that a gap is present before the first charging between the inner circumferential surface of the electrode group and the outer circumferential surface of the core member, and the inner circumferential surface of the electrode group comes in contact with the outer circumferential surface of the core member in the lithium secondary battery in a discharged state after the first charging and discharging.

From the viewpoint of the ease of shrinking of the core member, the tensile strength of the material of the core member may be 1200 MPa or less, and is preferably 850 MPa or less. From the similar viewpoint, the elongation of the material of the core member may be 1% or more, and is preferably 2% or more.

A considerably large pressure is repeatedly applied during charging and discharging to the core member inserted in the hollow of the electrode group. Therefore, the material of the core member is required to have considerable mechanical strength and durability. From the viewpoint of the strength and the durability, the tensile strength of the material of the core member may be 200 MPa or more, and may be 400 MPa or more. From the similar viewpoint, the elongation of the material of the core member may be 30% or less, and may be 10% or less.

The tensile strength and the elongation of the material of the core member are determined in accordance with JIS Z 2241 (Metallic materials-Tensile testing-Method). However, the metal foil used for the material of the core member is a thin foil, and skilled techniques are required for the finishing method of the parallel portion cross section when preparing a test piece, the measurement, etc., and it is desirable to perform the measurement at an institution with a proven track record.

The material of the core member is not particularly limited, and may be a metal material, and may be a metal material with a plated surface. The metal material may include one kind of metal, and may include an alloy containing two or more kinds of metals. Examples of the metal material include aluminum, magnesium, titanium, copper, iron, steel, carbon steel, nickel, duralumin, cupronickel, bronze, and brass. A material with a plated surface may also be used. In particular, from the viewpoint of the strength and the durability stainless steel is preferred, and austenitic stainless steel is particularly preferred because it is less likely to become brittle.

The shape of the core member may be selected according to the shape of the hollow of the electrode group. The outer diameter of the core member may be, for example, a size that allows the inner circumferential surface of the electrode group to come in contact with the outer circumferential surface of the core member in the lithium secondary battery in a discharged state after the first charging and discharging. In this case, all the time through during charging and discharging, a moderate pressure is applied from the core member to the electrode group from the inner circumferential side, so that the buckling of the electrodes is effectively suppressed.

The core member may be fixedly disposed in the hollow of the electrode group. That is, the core member may be fixed to the end (e.g., the end of the separator) on the inner circumferential side (the winding-start side) of the electrode group. For fixing, for example, a single-sided tape or a double-sided tape can be used. In the case of fixing the core member, the core member is integrated with the electrode group. Therefore, the core member can easily shrink in response to the volume change of the electrode group, and through shrinking, can easily absorb the stress of the whole electrode group. The core member may not be necessarily fixed to the end on the inner circumference side (the winding-start side) of the electrode group. In the case of not fixing the core member, the energy density can be increased by the amount corresponding to the volume of the tape used for fixing, and it is not necessary to separately install a machine for fixing.

The shape of the core member is preferably a hollow tubular shape. The nonaqueous electrolyte is housed in the hollow of the core member, suppressing the occurrence of electrolyte depletion of the electrode group. The electrolyte depletion of the electrode group is a phenomenon in which the electrode group is strongly pushed from its inner circumferential side by the core member, and the nonaqueous electrolyte is pushed out of the electrode group, causing the nonaqueous electrolyte in the electrode group to be depleted.

The battery may include an outer can that houses the electrode group, the core member, and the nonaqueous electrolyte. The outer can is a metal case, which is sometimes called a battery can. The material of the outer can is required to have excellent strength and durability. The material of the outer can may be, although not particularly limited to, a metal, and in particular, is desirably stainless steel in terms of its strength and durability. The shape of the outer can is, for example, a tubular shape (cylindrical tubular shape, flat tubular shape, prismatic tubular shape, etc.) with a bottom. A sealing body is disposed at the opening of the outer can, sealing the battery.

The inner circumferential surface of the outer can faces the outer circumferential surface of the electrode group. The presence of the outer can further stabilize the shape of the electrode group, and the buckling of the electrodes (esp., on the outer circumferential side of the electrode group) is likely to be suppressed. The inner diameter of the outer can may be set such that the outer circumferential surface of the electrode group comes in contact with the inner circumferential surface of the outer can in the lithium secondary battery in a discharged state after the first charging and discharging.

In the following, each constituent element of the lithium secondary battery will be specifically described.

[Negative electrode]

In the lithium secondary battery, lithium metal deposits on the surface of the negative electrode during charging. Specifically, through charging, lithium ions contained in the nonaqueous electrolyte receive electrons on the negative electrode to become lithium metal, which deposits on the surface of the negative electrode. The lithium metal deposited on the surface of the negative electrode dissolves as lithium ions into the nonaqueous electrolyte through discharging. The lithium ions contained in the nonaqueous electrolyte may be either derived from a lithium salt added to the nonaqueous electrolyte or supplied from the positive electrode active material through charging, or both.

In the lithium secondary battery, for example, 70% or more of the rated capacity develops through deposition and dissolution of lithium metal. The migration of electrons at the negative electrode during charging and during discharging is mainly due to the deposition and the dissolution of lithium metal at the negative electrode. Specifically, 70 to 100% (e.g., 80 to 100%, 90 to 100%) of the migration of electrons (in another aspect, electric current) at the negative electrode during charging and during discharging is due to the deposition and the dissolution of lithium metal. That is, the negative electrode of the lithium secondary battery according to the present disclosure differs from a negative electrode in which the migration of electrons at the negative electrode during charging and during discharging is mainly due to absorption and release of lithium ions into and from the negative electrode active material (graphite etc.).

In a battery in which lithium metal deposits on the negative electrode during charging, the open circuit potential (OCV: open circuit voltage) of the negative electrode at full charge (e.g., SOC 98% or more) is, for example, 70 mV or less, relative to lithium metal (dissolution/deposition potential of lithium). The OCV of the negative electrode at full charge can be measured by disassembling the battery in a fully charged state under an argon atmosphere to take out the negative electrode, and assembling it into a cell for measurement, with lithium metal used as a counter electrode. The nonaqueous electrolyte of the cell may be of the same composition as the electrolyte in the disassembled battery.

(Negative electrode support)

The negative electrode includes a negative electrode support that supports the lithium metal deposited during charging. The thickness of the negative electrode support is not particularly limited, and is, for example, 5 $\mu$m or more and 300 $\mu$m or less.

A lithium metal layer or a lithium alloy layer (hereinafter sometimes referred to as a lithium foundation layer) may be formed in advance by adhering a sheet-like (or foil-like) lithium metal or lithium alloy onto a surface of the negative electrode support. The lithium alloy can contain, in addition to lithium, an element, such as aluminum, magnesium, indium, and zinc. By allowing lithium metal to deposit during charging on the lithium foundation layer provided in advance, the dendritic deposition can be further effectively suppressed. The thickness of the lithium foundation layer may be, although not particularly limited to, in the range of 5 $\mu$m to 25 $\mu$m, for example.

The negative electrode support may be, for example, a foil- or film-shaped metal material. The metal foil used for the negative electrode support may be a copper foil (electrolytic copper foil). The metal material may be, for example, Cu, Ni, Fe, or alloys containing these metal elements. Examples of the alloy include Cu alloy and Fe alloy (stainless steel, etc.).

In particular, the negative electrode support preferably includes a stainless steel foil and an oxygen-free copper foil. The stainless steel foil is more preferably an austenitic stainless steel foil. In the case of an austenitic stainless steel foil, the embrittlement of the negative electrode support is suppressed, and the negative electrode support has moderate strength and flexibility, and is excellent in resistance to the stress generated in the negative electrode. Even when a copper foil containing a small amount of oxygen is used, the embrittlement of the negative electrode support is suppressed. The thickness of the negative electrode support is not particularly limited, and is, for example, 5 $\mu$m or more and 300 $\mu$m or less.

The austenitic stainless steel is a stainless steel having an austenite percentage of 50% or more. The austenite percentage may be 70% or more, may be 90% or more, and may be 100%.

The austenite percentage means a proportion (mass ratio) of the austenite phase in the stainless steel. When the contents of the austenite phase, the ferrite phase, and the martensite phase in the stainless steel are represented by x, y, and z, respectively, the austenite percentage is calculated as $\{x / (x + y + z)\} \times 100$. The austenite constitution has a face-centered cubic lattice structure (FCC structure), and the ferrite constitution and the martensitic constitution have a body-centered cubic lattice structure (BCC structure).

The austenitic stainless steel may contain, as a component other than Fe, for example, C, Si, Mn, P, S, Ni, Cr, Mn, Mo, Cu, N, or the like. The above stainless steel may be a low carbon type, an ultra-low carbon type, or a nitrogen-added type stainless steel, and may be a duplex stainless steel containing austenite.

Examples of the austenitic stainless steel include SUS301, SUS302, SUS303, SUS304, SUS305, SUS309, SUS310, SUS312, SUS315, SUS316L, SUS317, SUS321, and SUS347. In particular, SUS304 and SUS316L are preferred. The austenitic stainless steel is not limited to those exemplified above, and may be a stainless steel with an austenite percentage of 50% or more prepared in any way by a melting method. The austenitic stainless steel foil may be a foil softened by annealing.

The austenite percentage can be determined by the following method.

A sample (e.g., size: 25 mm square) of a stainless steel foil is prepared, and X-ray diffraction (XRD) measurement employing a two-dimensional detection function is performed on the sample, to obtain an XRD pattern (vertical axis: X-ray diffraction intensity, horizontal axis: diffraction angle 2θ). The size of the measurement area (microscopic region) is 15 mm square, for example.

Desirable XRD measurement conditions are shown below.

<Analysis apparatus>

Two-dimensional microscopic-region X-ray diffractometer (RINT-RAPID II, available from Rigaku Co., Ltd.)

<Analysis conditions>

Tube: Co
Monochromatization: a monochromator is used (CoKα)
Tube output: 40 kV - 30 mA
Detector: Imaging plate (2D)

(Reflection method)

Collimator: ϕ300 μm
ω angle: 25° to 35° (2°/sec)
ϕ angle: 360° rotation (1°/sec)
Measurement time (exposure): 30 minutes

The obtained XRD pattern is fitted by the least squares method utilizing a standard database, and next, quantitative analysis is performed by Rietveld analysis. The XRD pattern can have a diffraction peak corresponding to at least one of the austenite phase, the ferrite phase, and the martensitic phase. The analysis can be performed using a software accessory to the analysis apparatus. Through this analysis, the proportion (mass ratio) of the austenite phase to the total of the austenite phase, the ferrite phase, and the martensite phase is determined, as the austenite percentage. Several measurement areas are randomly selected in the sample, the austenite percentage in each measurement area is determined, to calculate an average value thereof.

The austenite percentage can be estimated using a Schaeffler's constitution diagram showing the relationship between ferrite-stabilizing and austenite-stabilizing elements, and the constitution. The constitution diagram shows the constitution ratio, with ferrite-stabilizing elements and austenite-stabilizing elements taken on both axes. The vertical axis of the constitution diagram shows a Ni equivalent, and the horizontal axis shows a Cr equivalent. The Cr equivalent is a value obtained by converting the degree of the ferrite stabilizing elements into the amount of chromium, and can be expressed by an equation: Cr equivalent = %Cr + %Mo + 1.5 × %Si + 0.5 × %Nb. The Ni equivalent is a value obtained by converting the degree of the austenite stabilizing elements into the amount of nickel, and can be expressed by an equation: Ni equivalent = %Ni + 30 × %C + 0.5 × %Mn.

In accordance with JIS G 0321, the component analysis of the stainless steel can be performed, and the quantitative analysis can be performed for the austenite-stabilizing element (Ni, Mn, C, etc.) and the ferrite-stabilizing element (Cr, Mo, Si, Nb).

The oxygen-free copper foil is a copper foil with an oxygen content of 50 ppm or less. The oxygen content may be 30 ppm or less, and may be 15 ppm or less. The oxygen content means an oxygen content in a base material excluding the oxide film covering the surface of the copper foil.

The oxygen-free copper foil may contain a small amount of component other than copper (e.g., Ni, Cr, Fe, Zn, Sn, Ag, Pb, Bi, Cd, Hg, O, P, S, Se, Te, H, etc.). The Cu content in the copper foil may be 99.9 mass% or more, and may be 99.96 mass% or more. The copper foil may be a rolled copper foil. The oxygen-free copper may be, for example, of alloy number C1020 specified in JIS H 3100.

The oxygen content in the copper foil can be determined by the following method.

A sample of copper foil is washed with nitric acid (1+1) for 10 seconds, to remove the oxide film on the sample surface. The above washing is repeated until the sample is reduced by 10 mass% or more. Next, the sample is washed with distilled water, alcohol, and acetone in this order. Next, the sample is dried with hot air, and immediately thereafter, an analysis by inert gas fusion-infrared absorption method is performed, to determine an oxygen content in the sample. The analysis apparatus that can be used is an oxygen-nitrogen simultaneous analyzer (TC-336, available from LECO Corporation).

The negative electrode support preferably includes a resin film. The resin film has favorable flexibility and can alleviate the stress generated in the negative electrode along with charging (deposition of lithium metal at the negative electrode). In addition, the stress generated in the negative electrode along with winding can also be alleviated. Therefore, the rupture of the negative electrode and the like can be suppressed. In addition, the resin film is lightweight, and is likely to increase the energy density of the secondary battery. Furthermore, the resin film is hardly cut during roll conveying and is easy to handle.

The resin film is a film mainly composed of a resin or an organic material, and 51 mass% or more of the resin film is composed of a resin or an organic material. The resin film may contain an inorganic material like inorganic particles. The resin film may have, on at least one surface, a thin film containing an inorganic material. The resin film may be a stretched film, may be a nonporous film (film without pores), and may be a film having orderly arranged pores. The resin film may be provided with pores by colliding particles, such as sand, therewith. The resin film may have insulating properties, may have electrical conductivity, and may be electrically non-conductive. The form and physical properties of the resin film are not particularly limited.

Examples of the resin contained in the resin film include, but not particularly limited to, a polyester resin, an olefin resin, a polyphenylene sulfide resin, an acrylic resin, a polycarbonate resin, a polyether ether ketone resin, a polyether sulfone resin, a polyamide resin, a polyimide resin, a nylon resin, a polyvinylidene chloride resin, a polyvinylidene fluoride, an ethylene-vinyl alcohol copolymer, a polyvinyl alcohol resin, a polystyrene resin, a urethane resin, and an epoxy resin. The resin contained in the resin film may be used singly or in combination of two or more kinds. The resin contained in the resin film may be a resin having an aromatic ring, and may be an olefin resin. When the resin has an aromatic ring (e.g., a benzene ring) in its molecule, the affinity between the resin film and the lithium metal layer is enhanced, leading to improved bonding between the two.

As the polyester resin, an aromatic polyester is preferred, which is preferably polyethylene terephthalate, polybutylene terephthalate, polyethylene naphthalate, and the like. The film including polyethylene terephthalate or the like may be an unstretched film or a biaxially stretched film. As the acrylic resin, polymethyl methacrylate and the like are exemplified. As the polyimide resin, an aromatic polyimide is preferred. As the polyamide resin, an aromatic polyamide (aramid resin) is preferred.

As the olefin resin, polypropylene, polyethylene, and the like are preferred. Polypropylene includes an unstretched polypropylene, a biaxially stretched polypropylene, and the like. Polyethylene includes a low-density polyethylene, a medium-density polyethylene, a high-density polyethylene, a linear low-density polyethylene, metallocene polyethylene, and the like. Examples of the olefin resin include, in addition to the above, an ethylene-vinyl acetate copolymer, an ethylene-methyl acrylate copolymer, an ethylene-ethyl acrylate copolymer, an ethylene-methyl methacrylate copolymer, an ethylene-acrylic acid copolymer, an ethylene-methacrylic acid copolymer, and an ionomer resin (i.e., one that contains at least one of an ethylene-acrylic acid copolymer and an ethylene-methacrylic acid copolymer).

The production method of a resin film is, for example, an extrusion molding, examples of which include a T-die method and an inflation method. The film may be an unstretched film or a stretched film. The stretched film may be a uniaxially stretched film and may be a sequentially (or simultaneously) biaxially stretched film. The number of monomers constituting the resin (polymer) is not particularly limited. The polymer may be a homopolymer, may be a copolymer, and may be a terpolymer. Without particular limitation on the arrangement of monomers, the polymer may be a random copolymer or a block copolymer. The resin film may be constituted of two or more kinds of resin films stacked together. The resin may be in a crystal state, may be in an amorphous state obtained through a rapid cooling method or the like, and may be in a mixed state of the two. In order to improve the adhesion, a surface of the resin film may be subjected to corona treatment or plasma treatment.

From the viewpoint of increasing the energy density of the lithium secondary battery, the thickness of the resin film is preferably as thin as possible as long as its mechanical strength is ensured. The thickness of the resin film may be, for example, 5 μm or more and 80 μm or less, and may be 5 μm or more and 30 μm or less.

The resin film is usually an electrically insulating material and has no current-collecting function. For ensuring the current collecting function of the electrode, a surface of the resin film may be covered with a foundation metal layer. Hereinafter, a resin film having a surface covered with a foundation metal layer is sometimes referred to as a "resin film with a foundation metal layer". It suffices when the foundation metal layer may cover, for example, a region supporting the active material layer (e.g., at least 90% of the region) and a region to which an electrode lead is attached, on the surface of the resin film.

In the case of a negative electrode, the foundation metal layer preferably contains, for example, copper, nickel, chromium, stainless steel, titanium, silver, gold, tin, or the like. In this case, the foundation metal layer is likely to be ensured to have corrosion resistance, electrical conductivity, and the like, and is unlikely to form an alloy with lithium.

From the viewpoint of improving the energy density of the battery, the thickness of the foundation metal layer, for example, may be 2 $\mu$m or less, and may be 1 $\mu$m or less. From the viewpoint of ensuring the current-collecting ability and the adhesion, the thickness of the foundation metal layer may be, for example, 0.001 $\mu$m or more.

In the case of a negative electrode of a lithium secondary battery, the lithium metal layer may bear the current collecting function. That is, the lithium metal layer may be disposed on the resin film, to form a negative electrode. In this case, a foundation metal layer may be provided on the surface of the resin film at a portion to which a negative electrode lead is connected.

The lithium metal layer may be adhered to the resin film with a foundation metal layer. With a foundation metal layer, the decrease in current collecting function can be suppressed even when the lithium metal layer is locally decreased during charge-discharge cycles, or the lithium metal changes into a lithium compound, causing the lithium metal to be isolated like islands.

The foundation metal layer can be formed by, for example, a vapor deposition method, such as vapor deposition and sputtering, an electroless plating method, an electrolytic plating method, a lamination method, and the like, without particular limitation on the forming method.

(Others)

The negative electrode may include a lithium ion storage layer (a layer that develops capacity through absorption and release of lithium ions into and from the negative electrode active material (graphite etc.)) supported on the negative electrode support. In this case, the open circuit potential of the negative electrode at full charge may be 70 mV or less relative to lithium metal (dissolution-deposition potential of lithium). When the open circuit potential of the negative electrode at full charge is 70 mV or less relative to lithium metal, the lithium ion storage layer at full charge has lithium metal on its surface. That is, the negative electrode develops capacity through deposition and dissolution of lithium metal.

The lithium ion storage layer is a layer of a negative electrode mixture containing a negative electrode active material. The negative electrode mixture may contain, in addition to the negative electrode active material, a binder, a thickener, a conductive agent, and the like.

Examples of the negative electrode active material include a carbonaceous material, a Si-containing material, and a Sn-containing material. The negative electrode may contain the negative electrode active material singly or in combination of two or more kinds. As the carbonaceous material, for example, graphite, graphitizable carbon (soft carbon), non-graphitizable carbon (hard carbon), and the like can be used.

The conductive material is, for example, a carbon material. Examples of the carbon material include carbon black, acetylene black, Ketjen black, carbon nanotubes, and graphite.

Examples of the binder include a fluorocarbon resin, polyacrylonitrile, a polyimide resin, an acrylic resin, a polyolefin resin, and a rubbery polymer. Examples of the fluorocarbon resin include polytetrafluoroethylene and polyvinylidene fluoride.

[Positive electrode]

The positive electrode includes, for example, a positive electrode support, and a positive electrode mixture layer supported on the positive electrode support. The positive electrode mixture layer includes, for example, a positive electrode active material, a conductive material, and a binder. The positive electrode mixture layer may be formed on only one surface or on both surfaces of the positive electrode support. The positive electrode can be obtained by, for example, applying a positive electrode mixture slurry containing a positive electrode active material, a conductive material, and a binder, onto both surfaces of the positive electrode support, and drying the applied films, followed by rolling. As the positive electrode active material, the binder, the conductive agent, and the like, for example, known materials can be used.

The positive electrode active material is a material that absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred because of its inexpensive manufacturing cost and high average discharge voltage.

The lithium-containing transition metal oxide is a composite oxide containing lithium and a metal Me other than lithium, in which the metal Me contains at least a transition metal. Among the lithium-containing transition metal oxides, a composite oxide having a crystal structure of a rock-salt type having a layered structure (layered rock-salt type) is preferred in terms of obtaining high capacity.

The metal Me may include Sc, Ti, V, Cr, Mn, Fe, Co, Ni, Cu, Y, Zr, W, and the like, as a transition metal element. The lithium-containing transition metal oxide may contain one kind of transition metal element, or may contain two or more kinds of transition metal elements. The metal Me desirably includes at least one selected from the group consisting of Co, Ni, and Mn as a transition metal element, and desirably contains at least Ni as a transition metal. The crystal form may be a form of monocrystal (single crystal), may be a form of polycrystal (multi crystal), and may include both of them.

The lithium-containing transition metal oxide may contain one or more typical elements, as necessary. Examples of the typical element include Mg, Al, Ca, Zn, Ga, Ge, Sn, Sb, Pb, and Bi. The typical element may be Al. That is, the metal Me may contain Al as an optional component.

The lithium-containing transition metal oxide is represented, for example, by a general formula (1): $Li_aNi_bM_{1-b}O_2$. In the general formula (1), $0.9 \leq a \leq 1.2$ and $0.65 \leq b \leq 1$ are satisfied, and M is at least one element selected from the group consisting of Co, Mn, Al, Ti, Fe, Nb, B, Mg, Ca, Sr, Zr, and W.

The molar ratio mLi/mMe of a total amount mLi of Li that the positive and negative electrodes have, to an amount mMe of metal Me that the lithium-containing composite oxide has is, for example, 1.2 or less, and may be 1.1 or less.

For the positive electrode support, for example, a foil- or sheet-like metal material containing Al, Ti, Fe, and the like can be used. The metal material may be Al, Al alloy, Ti, Ti alloy, Fe alloy (stainless steel (SUS), etc.). From the viewpoint of suppressing the rupture of the positive electrode during charging and discharging, a resin film with a foundation metal layer may be used for the positive electrode support. In the case of the positive electrode, the foundation metal layer contains, for example, aluminum, stainless steel, and the like.

The thickness of the positive electrode support is not particularly limited, and is, for example, 5 $\mu$m or more and 300 $\mu$m or less.

[Separator]

For the separator, a porous sheet having ion permeability and electrically insulating properties is used. Examples of the porous sheet include a thin film having micropores, a woven fabric, and a nonwoven fabric. The material of the separator is not particularly limited, and may be a polymer material. Examples of the polymer material include an olefin resin, a polyamide resin, and cellulose. Examples of the olefin resin include polyethylene, polypropylene, and a copolymer of ethylene and propylene. The separator may contain an additive, as necessary. Examples of the additive include an inorganic filler.

The thickness of the separator is, although not particularly limited to, for example, 5 $\mu$m or more and 80 $\mu$m or less, and more preferably 10 $\mu$m or more and 50 $\mu$m or less.

[Nonaqueous electrolyte]

A nonaqueous electrolyte having lithium ion conductivity contains, for example, a nonaqueous solvent, and lithium ions and anions dissolved in the nonaqueous solvent. The nonaqueous electrolyte may be in the form of liquid or gel. The liquid nonaqueous electrolyte is prepared by dissolving a lithium salt in a nonaqueous solvent. When the lithium salt dissolves in the nonaqueous solvent, lithium ions and anions are produced.

As the lithium salt or anion, a known material used in a nonaqueous electrolyte for lithium secondary batteries can be used. Specifically, $BF_4^-$, $ClO_4^-$, $PF_6^-$, $CF_3SO_3^-$, $CF_3CO_2^-$, imide anions, an oxalate complex anion, and the like can be used. Examples of the imide anions include $N(SO_2CF_3)_2^-$, and $N(C_mF_{2m+1}SO_2)_x(C_nF_{2n+1}SO_2)_y^-$, where m and n are each independently an integer of 0 or 1 or more, x and y are each independently 0, 1, or 2, and satisfy x+y = 2. The oxalate complex anion may contain boron and/or phosphorus. The nonaqueous electrolyte may contain these anions singly or in combination of two or more kinds.

From the viewpoint of suppressing dendritic deposition of lithium metal, the nonaqueous electrolyte preferably contains at least an oxalate complex anion, and in particular, desirably, contains an oxalate complex anion having fluorine. The oxalate complex anion having fluorine react with lithium, which allows lithium metal to easily deposit uniformly in the form of fine particles. Therefore, local deposition of lithium metal can be easily suppressed. The oxalate complex anion having fluorine may be combined with another anion. The other anion may be $PF_6^-$ and/or imide anions. Examples of the oxalate complex anion include bis(oxalato)borate anion, difluoro(oxalato)borate anion ($BF_2(C_2O_4)^-$), $PF_4(C_2O_4)^-$, and $PF_2(C_2O_4)_2^-$. It is desirable to use at least difluoro(oxalato)borate anion.

The nonaqueous solvent may be, for example, an ester, an ether, a nitrile, an amide, and halogen substituted derivatives thereof. The nonaqueous electrolyte may include these nonaqueous solvents singly or in combination of two or more kinds. Examples of the halogen substituted derivatives include a fluoride.

As the ester, for example, a carbonic acid ester, a carboxylic acid ester, and the like are exemplified. Examples of a cyclic carbonic acid ester include ethylene carbonate, propylene carbonate, and fluoroethylene carbonate (FEC). Examples of a chain carbonic acid ester include dimethyl carbonate (DMC), ethyl methyl carbonate (EMC), and diethyl carbonate. Examples of a cyclic carboxylic acid ester include $\gamma$-butyrolactone, and $\gamma$-valerolactone. Examples of a chain carboxylic acid ester include ethyl acetate, methyl propionate, and methyl fluoropropionate.

As the ether, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The lithium salt concentration in the nonaqueous electrolyte is, for example, 0.5 mol/L or more and 3.5 mol/L or less. The anion concentration in the nonaqueous electrolyte may be set to 0.5 mol/L or more and 3.5 mol/L or less. The oxalate complex anion concentration in the nonaqueous electrolyte may be set to 0.05 mol/L or more and 1 mol/L or less.

In the following, an embodiment of the nonaqueous electrolyte secondary battery according to the present disclosure will be further described with reference to the drawings. In each drawing, the shape and feature of each component do not necessarily reflect the actual dimensions, and are not necessarily drawn at the same scale. The same components are denoted by the same reference numerals throughout the drawings.

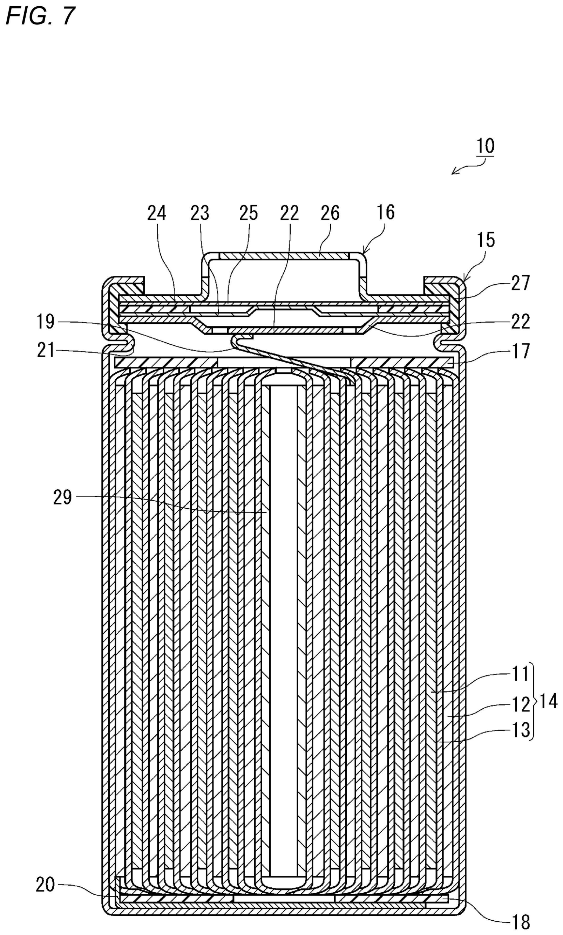

FIG. 7 is a schematic longitudinal sectional view of a secondary battery according to one embodiment of the present disclosure taken along a plane parallel to the winding axis.

A battery 10 includes a cylindrical battery case, a wound electrode group 14 housed in the battery case, and a nonaqueous electrolyte (not shown). The battery case includes a battery can 15 having a bottomed cylindrical shape, and a sealing body 16 sealing an opening of the battery can 15. The battery can 15 has, near the opening, an annular step portion 21 formed by partially pressing the sidewall of the battery can from outside. The sealing body 16 is supported on the opening-side surface of the step portion 21. A gasket 27 is disposed between the battery can 15 and the sealing body 16, ensuring the sealing performance of the battery can. Inside the battery can 15, electrically insulating plates 17 and 18 are disposed respectively at both ends in the winding axis direction of the electrode group 14.

The sealing body 16 includes a filter 22, a lower valve body 23, an electrically insulating member 24, an upper valve body 25, and a cap 26. The cap 26 is disposed outside the battery can 15, and the filter 22 is disposed inside the battery can 15. The lower valve body 23 and the upper valve body 25 are connected to each other at their respective centers, and the insulating member 24 is placed between their respective peripheral portions. The filter 22 and the lower valve body 23 are connected to each other at their respective peripheral portions. The upper valve body 25 and the cap 26 are connected to each other at their respective peripheral portions. The lower valve body 23 is provided with an air vent hole. When the internal pressure of the battery can rises due to abnormal heat generation or other causes, the upper valve body 25 bulges toward the cap 26, to be spaced apart from the lower valve body 23. This breaks the electrical connection between the lower valve body 23 and the upper valve body 25. When the internal pressure further rises, the upper valve body 25 ruptures to let gas escape through an opening provided in the cap 26.

The electrode group 14 includes a positive electrode 11, a negative electrode 12, and a separator 13. The positive electrode 11, the negative electrode 12, and the separator 13 interposed therebetween are all in a long-sheet shape (or a belt-like shape) and are wound together such that the width direction of each of them is parallel to the winding axis. A core member 29 is disposed in the hollow of the electrode group 14.

The positive electrode 11 is electrically connected, via a positive electrode lead 19, to the cap 26 serving as a positive electrode terminal. One end of the positive electrode lead 19 is connected, for example, near the center of the positive electrode 11 in the longitudinal direction. The other end of the positive electrode lead 19 extending from the positive electrode 11 passes through a through-hole formed in the insulating plate 17, and is welded to the filter 22 on its inside surface.

The negative electrode 12 is electrically connected, via a negative electrode lead 20 to the battery can 15 serving as a negative electrode terminal. One end of the negative electrode lead 20 is connected, for example, to an end portion of the negative electrode 12 in the longitudinal direction, and the other end is welded to the battery can 15 on its inner bottom surface.

Although the illustrated example is of a cylindrical lithium secondary battery including a wound electrode group, the shape or the like of the lithium secondary battery is not limited thereto, which may be prismatic and can be selected according to its use etc. from various shapes. In addition, known configurations other than those described above can be used without particular limitations.

<<Supplementary notes>>

The above description of embodiments discloses the following techniques.

(Technique 1)

A lithium secondary battery, comprising:

a wound electrode group having a positive electrode, a negative electrode, and a separator disposed between the positive electrode and the negative electrode;
a core member disposed in a hollow of the electrode group; and
a nonaqueous electrolyte having lithium ion conductivity, wherein
at the negative electrode, lithium metal deposits during charging, and the lithium metal dissolves during discharging, and
the core member has a hollow tubular shape, and has a slit extending in an axial direction, with both end portions in a circumferential direction that regulate the slit being misaligned without abutting each other.

(Technique 2)

The lithium secondary battery according to technique 1, wherein, during discharging in an initial stage, the core member has, in a radial direction, a region in which the both end portions face each other.

(Technique 3)

The lithium secondary battery according to technique 1, wherein, during discharging in an initial stage, in the circumferential direction of the core member, the both end portions are spaced apart from each other.

(Technique 4)

The lithium secondary battery according to techniques 1 to 3, wherein, during discharging after charge-discharge cycles, as compared to during discharging in an initial stage, the core member is shrunk in a radial direction.

(Technique 5)

The lithium secondary battery according to technique 4, wherein a shrinkage percentage of the core member after charge-discharge cycles is 2% or more and 80% or less.

(Technique 6)

The lithium secondary battery according to techniques 1 to 5, wherein a material of the core member includes a metal.

(Technique 7)

The lithium secondary battery according to techniques 1 to 6, wherein a material of the core member has a tensile strength of 850 MPa or less, and an elongation of 2% or more.

(Technique 8)

The lithium secondary battery according to techniques 1 to 7, wherein an outer shape of a cross section perpendicular to a winding axis of the core member is circular or elliptical.

(Technique 9)

The lithium secondary battery according to techniques 1 to 8, wherein a thickness in a radial direction of the core member is 0.005 mm or more and 0.3 mm or less.

(Technique 10)

The lithium secondary battery according to techniques 1 to 9, wherein a maximum outer diameter of the core member during discharging in an initial stage is 1.5 mm or more and 6 mm or less.

(Technique 11)

The lithium secondary battery according to techniques 1 to 10, wherein

the negative electrode includes a negative electrode support that supports the lithium metal deposited during charging, and
the negative electrode support includes a stainless steel foil, an oxygen-free copper foil, or a resin film.

[Examples]

The lithium secondary battery according to the present disclosure will be specifically described below with reference to Examples and Comparative Examples. It is to be noted, however, that the present disclosure is not limited to the following Examples.

<<Secondary batteries A1 to A12 and B1 to B4>>

(Production of positive electrode)

To 95 parts by mass of a positive electrode active material, 2.5 parts by mass of acetylene black, and 2.5 parts by mass of polyvinylidene fluoride were added, to which an appropriate amount of N-methyl-2-pyrrolidone was further added, and stirred together, to prepare a positive electrode mixture slurry. The positive electrode active material used here was a layered rock-salt type lithium-containing transition metal oxide containing Li, Ni, Co, and Al (the molar ratio of Li to the total of Ni, Co, and Al is 1.0).

The positive electrode mixture slurry was applied onto both surfaces of a belt-like Al foil (positive electrode support), and dried, and the applied films were rolled, to obtain a laminate in which a positive electrode composite layer was formed on each of both surfaces of the positive electrode support. The laminate was cut in a predetermined electrode size, to obtain a belt-like positive electrode 11. A positive electrode lead 19 made of Al was attached to a predetermined position of the positive electrode 11.

(Production of negative electrode)

A belt-like negative electrode support (thickness 10 $\mu$m) was prepared. In a dry atmosphere with a dew point of minus 30 degrees or less, lithium metal foil (thickness 30 $\mu$m) was pressure-bonded onto both surfaces of the negative electrode support, to dispose a lithium metal layer (foundation layer). In this way, a negative electrode 12 was produced. A negative electrode lead 20 made of Ni was attached to a predetermined position of the negative electrode 12. The lithium metal layer had a thickness of 55 $\mu$m during charging and a thickness of 30 $\mu$m during discharging. In other words, the thickness of the lithium metal deposited on the negative electrode during charging was 25 $\mu$m.

The negative electrode support used here was an oxygen-free copper foil, a stainless steel foil, or a resin film with a foundation metal layer. For the oxygen-free copper foil, a foil of alloy number C1020 specified in JIS H 3100 was used. For the stainless steel, an austenitic stainless steel foil (SUS316L) was used. For the resin film with a foundation metal layer, a polyethylene terephthalate (PET) film (thickness 12 $\mu$m) provided with a foundation metal layer (thickness 1.0 $\mu$m) of copper formed on each of both surfaces thereof was used.

(Preparation of separator)

A polyethylene separator (microporous film) having a thickness of 20 $\mu$m was prepared.

(Preparation of nonaqueous electrolyte)

In a mixed solvent of 1,2-dimethoxyethane and 1,1,2,2-tetrafluoroethyl-2,2,2-trifluoroethyl ether, $LiPF_6$ and $LiBF_2(C_2O_4)$ were respectively dissolved, to prepare a nonaqueous electrolyte. The concentration of $LiPF_6$ in the nonaqueous electrolyte was set to 1 mol/L. The concentration of $LiBF_2(C_2O_4)$ in the nonaqueous electrolyte was set to 0.1 mol/L.

(Assembling of battery)

In an inert gas atmosphere, the positive electrode, the negative electrode, and the separator disposed between the positive and negative electrodes were wound spirally by winding them around a core member, to form an electrode group in which the core member was disposed in the hollow. At this time, the core member was fixed with a tape to the end of the separator on the winding-start side, and then, the negative electrode and the positive electrode were inserted and wound. In this way, the core member was fixed in the hollow of the electrode group. In A1 to A10 and A12, the core member as illustrated in FIG. 1A, FIG. 2A, or FIG. 3A was used. In B1 to B4, the core member as illustrated in FIG. 6 (cylindrical core member 39 with no slits in the axial direction) was used. The maximum outer diameter and the thickness in the radial direction of the core member were set to the values as shown in Table 1. Note that when the outer shape of the cross section is a circle, the maximum outer diameter of the core member is the diameter of the circle, and when the outer shape of the cross section is an ellipse, the maximum outer diameter of the core member is the longest diameter of the ellipse.

In A11, the positive electrode and the negative electrode were wound spirally, with a separator interposed therebetween, by winding them around a winding core, to form a wound electrode group. The winding core was then removed, to obtain an electrode group having a hollow tubular shape. The core member as illustrated in FIG. 1A was then disposed in the hollow of the electrode group.

The electrode group with the core member was housed in a bag-shaped outer body formed of a laminate sheet including an Al layer, and after the nonaqueous electrolyte was injected into the outer body housing the electrode group and the core member, the outer body was sealed. A secondary battery (test cell) was thus fabricated. In Table 1, A1 to A12 are batteries of Examples, and B1 to B4 are batteries of Comparative Examples.

When the core member was disposed in the hollow of the electrode group, there was a gap between the inner circumferential surface of the electrode group and the outer circumferential surface of the core member. In other words, the inner diameter of the electrode group was slightly larger than the outer diameter of the core member. The size of the gap was designed such that the inner circumferential surface of the electrode group and the outer circumferential surface of the core member come into contact with each other by subsequent charging and discharging.

The following evaluation was performed on each of the obtained batteries.

[Evaluation 1: Capacity retention rate]

Each battery was subjected to a charge-discharge cycle test in a 25 °C environment. Charging and discharging were performed under the following conditions. The battery was allowed to rest for 20 minutes between charging and discharging.

(Charging)

A constant-current charging was performed at a current of 10 mA/cm$^2$ until the voltage reached 4.1 V, and then, a constant-voltage charging was performed at a voltage of 4.1 V until the current value reached 1 mA/cm$^2$.

(Discharging)

A constant-current discharging was performed at a current of 10 mA/cm$^2$ until the voltage reached 3.0 V.

One hundred cycles of charging and the discharging were performed, and a discharge capacity C1 at the 1st cycle and a discharge capacity C2 at the 100th cycle were measured. A ratio (percentage) of the C2 to the C1 was calculated as a capacity retention rate (%).

The following evaluation was performed on the core member of each battery.

[Evaluation 2: Shrinkage percentage of core member after charge-discharge cycles]

The shrinkage percentage (%) of the core member was determined by the already-described method. The charge-discharge cycles up to the discharging in the 50th cycle were performed under the same conditions as in the charge-discharge cycle test of Evaluation 1.

The evaluation results are shown in Table 1. In Table 1, the energy density of each battery is also shown. The energy density and the capacity retention in Table 1 are expressed as relative values, with the energy density and the capacity retention of the battery A1 taken as 100.

[Table 1]

| Lithium secondary battery | Core member | | | | | | Fixing of core member to electrode group | Negative electrode support | Evaluation | | |
| --- | --- | --- | --- | --- | --- | --- | --- | --- | --- | --- | --- |
| | Cross-sectional shape | Outer shape of cross section | Thickness in radial direction (mm) | Max. outer diameter (mm) | Tensile strength (MPa) | Elongation (%) | | | Shrinkage ratio of core material at 50th cycle (%) | Energy density (relative value) | Capacity retention rate at 100th cycle (relative value) |
| A1 | FIG. 3A | elliptical | 0.4 | 7 | 1200 | 1 | with | electrolytic Cu foil | 2 | 100 | 100 |
| A2 | FIG. 3A | elliptical | 0.15 | 7 | 1200 | 1 | with | electrolytic Cu foil | 7 | 100 | 102 |
| A3 | FIG. 3A | elliptical | 0.05 | 7 | 1200 | 1 | with | electrolytic Cu foil | 7 | 100 | 102 |
| A4 | FIG. 3A | elliptical | 0.05 | 4 | 1200 | 1 | with | electrolytic Cu foil | 5 | 110 | 101 |
| A5 | FIG. 1A | circular | 0.05 | 4 | 650 | 5 | with | electrolytic Cu foil | 9 | 110 | 105 |
| A6 | FIG. 2A | circular | 0.05 | 4 | 650 | 5 | with | electrolytic Cu foil | 9 | 110 | 105 |
| A7 | FIG. 1A | circular | 0.05 | 4 | 650 | 5 | with | oxygen-free Cu foil | 9 | 110 | 110 |
| A8 | FIG. 1A | circular | 0.05 | 4 | 650 | 5 | with | stainless steel foil | 9 | 110 | 111 |
| A9 | FIG. 1A | circular | 0.05 | 4 | 650 | 5 | with | resin film | 9 | 110 | 112 |
| A10 | FIG. 1A | circular | 0.05 | 2.5 | 650 | 5 | with | resin film | 9 | 112 | 112 |
| A11 | FIG. 1A | circular | 0.05 | 2.5 | 650 | 5 | without | resin film | 9 | 112 | 110 |
| A12 | FIG. 1A | circular | 0.02 | 2.5 | 650 | 5 | with | resin film | 9 | 112 | 113 |
| B1 | FIG. 6 | circular | 0.4 | 7 | 1200 | 1 | with | electrolytic Cu foil | 0 | 100 | 80 |
| B2 | FIG. 6 | circular | 0.15 | 7 | 1200 | 1 | with | electrolytic Cu foil | 0 | 100 | 80 |
| B3 | FIG. 6 | circular | 0.05 | 4 | 1200 | 1 | with | electrolytic Cu foil | 0 | 110 | 83 |

(continued)

| Lithium secondary battery | Core member | | | | | | | Negative electrode support | Evaluation | | |
|---|---|---|---|---|---|---|---|---|---|---|---|
| | Cross-sectional shape | Outer shape of cross section | Thickness in radial direction (mm) | Max. outer diameter (mm) | Tensile strength (MPa) | Elongation (%) | Fixing of core member to electrode group | | Shrinkage ratio of core material at 50th cycle (%) | Energy density (relative value) | Capacity retention rate at 100th cycle (relative value) |
| B4 | FIG. 6 | circular | 0.05 | 4 | 650 | 5 | with | stainless steel foil | 0 | 110 | 84 |

In the batteries A1 to A12, the capacity retention rates were high, as compared to in the batteries B1 to B4. In the batteries A1 to A12, the core member shrunk in the radial direction during charging and discharging (shrinkage percentage 2 to 9%), the increase in the surface pressure of the electrode group was alleviated, and the deterioration in cycle characteristics due to damage to the electrode group was suppressed. In the batteries B1 to B4, the core member did not shrink in the radial direction during charging and discharging (shrinkage percentage 0%), the surface pressure of the electrode group increased, the electrode group was damaged, and the cycle characteristics deteriorated.

In the batteries in which the diameter of the hollow of the electrode group (the maximum outer diameter of the core member) was small, the energy density increased (A1 to A3 < A4 to A9 < A10 to A12).

[Industrial Applicability]

The lithium secondary battery of the present disclosure is applicable to electronic equipment, such as cellular phones, smart phones, and tablet terminals, electric cars, hybrid cars, plug-in hybrid cars, storage batteries for home appliances, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

10: lithium secondary battery, 11: positive electrode, 12: negative electrode, 13: separator, 14: electrode group, 15: battery can, 16: sealing body, 17, 18: insulating plate, 19: positive electrode lead, 20: negative electrode lead, 21: step portion, 22: filter, 23: lower valve body, 24: insulating member, 25: upper valve body, 26: cap, 27: gasket, 29, 39: core member, 41: slit, 42a, 42b: circumferential end portion

## Claims

1. A lithium secondary battery, comprising:

   a wound electrode group having a positive electrode, a negative electrode, and a separator disposed between the positive electrode and the negative electrode;
   a core member disposed in a hollow of the electrode group; and
   a nonaqueous electrolyte having lithium ion conductivity, wherein
   at the negative electrode, lithium metal deposits during charging, and the lithium metal dissolves during discharging, and
   the core member has a hollow tubular shape, and has a slit extending in an axial direction, with both end portions in a circumferential direction that regulate the slit being misaligned without abutting each other.

2. The lithium secondary battery according to claim 1, wherein, during discharging in an initial stage, the core member has, in a radial direction, a region in which the both end portions face each other.

3. The lithium secondary battery according to claim 1, wherein, during discharging in an initial stage, in the circumferential direction of the core member, the both end portions are spaced apart from each other.

4. The lithium secondary battery according to claim 1, wherein, during discharging after charge-discharge cycles, as compared to during discharging in an initial stage, the core member is shrunk in a radial direction.

5. The lithium secondary battery according to claim 4, wherein a shrinkage percentage of the core member after charge-discharge cycles is 2% or more and 80% or less.

6. The lithium secondary battery according to claim 1, wherein a material of the core member includes a metal.

7. The lithium secondary battery according to claim 1, wherein a material of the core member has a tensile strength of 850 MPa or less, and an elongation of 2% or more.

8. The lithium secondary battery according to claim 1, wherein an outer shape of a cross section perpendicular to a winding axis of the core member is circular or elliptical.

9. The lithium secondary battery according to claim 1, wherein a thickness in a radial direction of the core member is 0.005 mm or more and 0.3 mm or less.

10. The lithium secondary battery according to claim 1, wherein a maximum outer diameter of the core member during discharging in an initial stage is 1.5 mm or more and 6 mm or less.

11. The lithium secondary battery according to claim 1, wherein

the negative electrode includes a negative electrode support that supports the lithium metal deposited during charging, and
the negative electrode support includes a stainless steel foil, an oxygen-free copper foil, or a resin film.

FIG. 1A

FIG. 1B

FIG. 2A

FIG. 2B

FIG. 3A

FIG. 3B

FIG. 4

FIG. 5

FIG. 6

# FIG. 7

## INTERNATIONAL SEARCH REPORT

| International application No. |
|---|
| **PCT/JP2023/046244** |

| **A.** | **CLASSIFICATION OF SUBJECT MATTER** |
|---|---|

*H01M 10/0587*(2010.01)i; *H01M 4/66*(2006.01)i
FI:  H01M10/0587; H01M4/66 A

According to International Patent Classification (IPC) or to both national classification and IPC

| **B.** | **FIELDS SEARCHED** |
|---|---|

Minimum documentation searched (classification system followed by classification symbols)

H01M10/0587; H01M4/66

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| X | WO 2022/209601 A1 (PANASONIC INTELLECTUAL PROPERTY MANAGEMENT CO., LTD.) 06 October 2022 (2022-10-06)<br>    paragraphs [0015]-[0025], [0043], [0077], [0098]-[0105] | 1-11 |
| A | JP 4-332481 A (SONY CORPORATION) 19 November 1992 (1992-11-19)<br>    paragraph [0025] | 7 |
| A | JP 2021-109817 A (AGC INC.) 02 August 2021 (2021-08-02)<br>    paragraphs [0099], [0106] | 7 |
| A | ステンレス協会. ステンレス鋼便覧,第3版. Nikkan Kogyo Shimbun, Ltd., 24 January 1995, pp. 557, (JAPAN STAINLESS STEEL ASSOCIATION), non-official translation (Handbook of Stainless Steel, Third Edition.)<br>    table 4.6, fig. 4.2 | 7 |
| A | JP 2005-259567 A (MATSUSHITA ELECTRIC INDUSTRIAL CO., LTD.) 22 September 2005 (2005-09-22)<br>    entire text, all drawings | 1-11 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 March 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2023/046244** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2009-252503 A (TOYOTA JIDOSHA KABUSHIKI KAISHA) 29 October 2009 (2009-10-29)<br>entire text, all drawings | 1-11 |
| A | US 2022/0037692 A1 (VARTA MICROBATTERY GMBH) 03 February 2022 (2022-02-03)<br>entire text, all drawings | 1-11 |

Form PCT/ISA/210 (second sheet) (July 2022)

### INTERNATIONAL SEARCH REPORT
Information on patent family members

International application No.

**PCT/JP2023/046244**

| Patent document cited in search report | | | Publication date (day/month/year) | Patent family member(s) | | | Publication date (day/month/year) |
|---|---|---|---|---|---|---|---|
| WO | 2022/209601 | A1 | 06 October 2022 | EP 4318725 A1 paragraphs [0015]-[0025], [0043], [0078], [0099]-[0106] CN 117099240 A | | | |
| JP | 4-332481 | A | 19 November 1992 | (Family: none) | | | |
| JP | 2021-109817 | A | 02 August 2021 | CN 113121092 A paragraph [0141,0150] KR 10-2021-0092133 A | | | |
| JP | 2005-259567 | A | 22 September 2005 | (Family: none) | | | |
| JP | 2009-252503 | A | 29 October 2009 | US 2011/0020679 A1 entire text, all drawings WO 2009/123081 A1 KR 10-2010-0120230 A CN 101981748 A | | | |
| US | 2022/0037692 | A1 | 03 February 2022 | EP 3945617 A1 entire text, all drawings CN 114006020 A | | | |

Form PCT/ISA/210 (patent family annex) (July 2022)

**EP 4 645 513 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001229970 A